# EUROPÄISCHE PATENTSCHRIFT

(11) **EP 4 398 717 B1**
(45) Veröffentlichungstag und Bekanntmachung des Hinweises auf die Patenterteilung: **05.11.2025**
(21) Anmeldenummer: 21772664.5
(22) Anmeldetag: 07.09.2021
(51) Int. Cl.: A01K 47/02, A01K 47/04

(54) **VORRICHTUNG UND VERFAHREN ZUR HERSTELLUNG VON MITTELWÄNDEN FÜR BIENENSTÖCKE**
DEVICE AND METHOD FOR THE PRODUCTION OF CENTRE WALLS FOR BEEHIVES
DISPOSITIF ET PROCÉDÉ POUR LA FABRICATION DE CLOISONS CENTRALES POUR RUCHES

(43) Veröffentlichungstag der Anmeldung: 17.07.2024
(73) Patentinhaber: Ingenieurbüro Eder GmbH, 4974 Reichersberg (AT)
(72) Erfinder: EDER, Karl, 4974 Reichersberg (AT)
(74) Vertreter: Patentanwälte Pinter & Weiss OG
(86) Internationale Anmeldenummer: PCT/AT2021/060318
(87) Internationale Veröffentlichungsnummer: WO 2023/035018

(56) Entgegenhaltungen:
- RU-C1- 2 406 299
- US-A- 2 561 147
- US-A- 3 176 058

## Beschreibung

Die Erfindung betrifft eine Walze zur Verwendung in einer Vorrichtung zur Herstellung einer, ein Wabenmuster aufweisenden, Mittelwand für einen Bienenstock, wobei an einer äußeren Umfangsfläche der Walze eine Mehrzahl von wabenförmigen Vorsprüngen zur Ausbildung des Wabenmusters auf der Mittelwand vorgesehen ist, wobei jeder wabenförmige Vorsprung an seiner, der äußeren Umfangsfläche der Walze abgewandten Seite, ein freies Vorsprungsende aufweist. Die Erfindung betrifft zudem eine Vorrichtung zur Herstellung einer, ein Wabenmuster aufweisenden, Mittelwand für einen Bienenstock, wobei in der Vorrichtung zwei gegenläufig drehbare Walzen mit parallelen Walzenachsen vorgesehen sind, wobei die Walzenachsen in einem vorgegebenen Achsabstand voneinander beabstandet angeordnet sind, sodass zwischen einander zugewandten Abschnitten der äußeren Umfangsflächen der Walzen ein Zwischenraum ausgebildet ist. Weiters betrifft die Erfindung eine Verwendung der Vorrichtung zur Herstellung einer, ein beidseitiges Wabenmuster aufweisenden, Mittelwand für einen Bienenstock.

Mittelwände werden in Bienenstöcken dazu verwendet, um einen rascheren Ausbau der Bienenwaben durch die (Honig-)bienen zu fördern. Eine Bienenwabe ist bekanntermaßen ein von den Bienen aus Bienenwachs errichtetes Wabengebilde mit sechseckigen Zellen, die sowohl bebrütet als auch für die Einlagerung von Honig benötigt werden. Eine gattungsgemäße Mittelwand ist beispielsweise in DE 415651 offenbart. Die Mittelwände werden in sogenannten Wabenrähmchen, die meist aus Holz ausgebildet sind, angeordnet. Die Wabenrähmchen inkl. daran angeordneter Mittelwand werden dann in den Bienenstock, die sogenannte Beute, eingehängt. Die Größe der Mittelwand richtet sich dabei nach der Größe der verwendeten Wabenrähmchen. Die Größe der Wabenrähmchen kann je nach Imkerei variieren. Gängige Maße von Wabenrähmchen sind beispielsweise das Deutsch-Normal-Maß, das Zander-Maß, das modifizierte Dadant-Maß, das Dadant Blatt Maß, das Langstroth-Maß oder das Kuntsch-Maß. Daneben gibt es noch einige weitere bekannte Maße.

Bisherige technische Lösungen zur Herstellung solcher Mittelwände beruhen auf mehreren hintereinander folgenden Schritten. Beispielsweise erfolgt zunächst ein Gießen einer Platte, gefolgt von einem Einprägen des Wabenmusters in die Platte, einem Besäumen der Kanten der Platte und ein Schneiden der Platte auf eine festgelegte Größe, um die fertige Mittelwand zu erzeugen. Üblicherweise wird als Material zur Herstellung von Mittelwänden Wachs verwendet, das bei der Honigernte als sogenanntes Entdeckelungswachs anfällt, oder Wachs, das durch den Austausch bebrüteter Bienenwaben vorhanden ist. Dabei kann beispielsweise Eigenwachs verwendet werden, das in einer Imkerei anfällt oder auch Fremdwachs, das man beispielsweise durch Zukauf oder Tausch erhält.

Aus hygienischen Gründen wird in der Regel Eigenwachs bevorzugt, weil dadurch die Gefahr des Einbringens von Seuchen, Schädlingen oder Pestizidrückständen verringert wird. Bei der Verwendung von Fremdwachs erfolgt in der Regel eine Behandlung durch Pestizide, beispielsweise zum Schutz gegen die Varroamilbe. Eine Herstellung von Mittelwänden durch externe Unternehmen aus dem Eigenwachs von Imkereien ist jedoch oftmals erst ab einer gewissen Wachsmenge von ca. 25 kg überhaupt möglich. Für solche Wachsmengen müssten kleine Imkereien ihr Wachs allerdings über mehrere Jahre sammeln, was natürlich keine befriedigende Lösung darstellt.

RU 2 406 299 C1 offenbart eine Vorrichtung in Form eines Walzwerks zum Aufprägen eines Wabenmusters auf eine Bahn aus Wachs. Nachteilig ist hierbei der komplexe Aufbau der Walzen aus einer Vielzahl an Ringen. Zudem sind vor dem Aufprägen des Wabenmusters vorgelagerte Arbeitsschritte erforderlich, beispielsweise das Bereitstellen einer Lage aus Wachs sowie das Besprühen der Lage mit einem Trennmittel. Gleichfalls sind nach dem Aufprägen des Wabenmusters nachgelagert Arbeitsschritte erforderlich, um eine fertige Mittelwand herzustellen, z.B. das eingangs genannten Besäumen sowie das Schneiden auf die gewünschte Länge. RU 2 417 585 C1 offenbart eine ähnliche Vorrichtung, wobei die wabenförmigen Vorsprünge an den Walzen eine spezielle dreidimensionale Struktur aufweisen.

DE 841 826 offenbart beispielsweise eine Maschine zum Abschneiden von Stücken einer vorgegebenen Länge von einer endlosen Bahn aus Kunstwaben. US 2 561 147 A offenbart eine weitere Maschine zum Herstellen von Wabenmustern für Bienen.

Es ist daher die Aufgabe der Erfindung, eine möglichst einfach aufgebaute und kostengünstig herstellbare Vorrichtung bereitzustellen, die eine möglichst einfache Herstellung von Mittelwänden für Bienenstöcke aus Eigenwachs mit möglichst wenigen Arbeitsschritten ermöglicht.

Die Aufgabe wird erfindungsgemäß mit der eingangs genannten Walze dadurch gelöst, dass in der Walze zumindest eine Kammer zur Aufnahme eines Trenn- und/oder Kühlmittels vorgesehen ist und dass an der Walze zumindest ein Verbindungskanal vorgesehen ist, der die Kammer mit dem Vorsprungsende zumindest einer der wabenförmigen Vorsprünge und/oder mit der äußeren Umfangsfläche der Walze verbindet. Dadurch kann die Kammer vor der Herstellung der Mittelwand mit einem geeigneten Trenn- und/oder Kühlmittel befüllt werden. Während der Herstellung der Mittelwand kann das Trenn- und/oder Kühlmittel durch den zumindest einen Verbindungskanal dem Vorsprungsende und in Folge dem Material zugeführt werden, aus dem die Mittelwand hergestellt wird. Vorzugsweise sind in der Praxis natürlich eine Mehrzahl von Verbindungskanälen an der Walze vorgesehen, beispielsweise ein Verbindungskanal je wabenförmigem Vorsprung. Durch die Zuführung des Trenn- und/oder Kühlmittels kann einerseits die Gefahr des Anhaftens des zur Herstellung der Mittelwand verwendeten Materials an der Walze verringert werden, sodass es zu keiner Beschädigung und zu möglichst geringen Verformungen der Mittelwand kommt. Zum anderen kann die Kühlung der Walze und des Mittelwand-Materials verbessert werden, wodurch die Aushärtung beschleunigt und folglich die Formstabilität der Mittelwand verbessert werden kann.

Vorzugsweise ist zumindest ein Verbindungskanal als Kapillare ausgebildet. Dadurch kann das Trenn- und/oder Kühlmittel mittels Kapillarwirkung von der Kammer zur Oberfläche des wabenförmigen Vorsprungs transportiert werden, ohne dass eine separate Fördereinrichtung erforderlich ist.

Vorzugsweise ist zumindest der Teil der Walze, an dem der zumindest eine Verbindungskanal vorgesehen ist, aus Kunststoff, Metall, Keramik oder Kunstharz ausgebildet, wobei es besonders vorteilhaft ist, wenn zumindest der Teil der Walze, an dem der zumindest eine Verbindungskanal vorgesehen ist, durch ein additives Fertigungsverfahren hergestellt ist, vorzugsweise durch 3D-Druck. Dadurch lässt sich die Walze sehr einfach ohne großen Fertigungsaufwand herstellen, beispielsweise mittels eines geeigneten 3D-Druckers. Dadurch können auch geringe Stückzahlen wirtschaftlich hergestellt werden, z.B. von Kleinimkereien selbst. Durch additive Fertigung kann die Walze in vorteilhafter Weise auch einteilig ausgebildet werden, was den Montageaufwand verringert. Insbesondere, wenn eine Vielzahl von Verbindungskanälen in Form von Kapillaren an der Walze vorgesehen werden, ist die Fertigung durch ein additives Verfahren vorteilhaft, weil der geringe Durchmesser der Kapillare durch herkömmliche Fertigungsverfahren, wie z.B. spanende Bearbeitung, nicht oder nur mit sehr großem Aufwand realisierbar ist.

Die Walze ist vorzugsweise zylindrisch ausgebildet, wobei die Walze besonders bevorzugt hohlzylindrisch ist, um die Kammer in einem Hohlraum der hohlzylindrischen Walze auszubilden. Die Kammer ist dadurch im Wesentlichen durch den gesamten Innenraum des Hohlzylinders gebildet, sodass ein großes Volumen zur Aufnahme des Kühl- und/oder Trennmittels bereitgestellt wird. Zudem kann dadurch die Herstellung vereinfacht werden und der Materialbedarf verringert werden. Der zylindrische Hohlraum erstreckt sich dabei vorzugsweise zumindest über den Bereich der Walzenlänge, in dem die Verbindungskanäle vorgesehen sind, sodass diese vorzugsweise radial in die Kammer münden.

Es ist vorteilhaft, wenn an der Walze im Bereich zumindest eines axialen Walzenendes, vorzugsweise im Bereich beider axialer Walzenenden, zumindest ein scheibenförmiger Vorsprung und/oder zumindest eine Umfangsnut vorgesehen sind. Dadurch kann der scheibenförmige Vorsprung einer Walze in die Umfangsnut einer benachbarten Walze eingreifen und dadurch den Zwischenraum bzw. Gusskanal in axialer Richtung der Walzen begrenzen. Wenn an beiden Walzenenden jeweils zusammenwirkende scheibenförmige Vorsprünge und Umfangsnuten vorgesehen sind, kann durch deren axialen Abstand eine Breite der Mittelwand festgelegt werden. Dadurch wird die Herstellung der Mittelwand weiter vereinfacht, weil kein nachgelagerter Arbeitsschritt zum seitlichen Besäumen mehr erforderlich ist.

Es ist weiters vorteilhaft, wenn an der äußeren Umfangsfläche der Walze zumindest eine Nut vorgesehen ist, welche gegenüberliegende axiale Walzenenden der Walze verbindet und/oder dass an der äußeren Umfangsfläche der Walze zumindest eine Feder vorgesehen ist, welche die gegenüberliegenden Walzenenden der Walze verbindet, wobei die Nut und/oder die Feder vorzugsweise parallel zur Walzenachse der Walze verlaufen. Dadurch kann die Feder einer Walze in die Nut einer benachbarten Walze eingreifen, wodurch eine Länge der Mittelwand begrenzt werden kann. Dadurch wird die Herstellung der Mittelwand weiter vereinfacht, weil kein nachgelagerter Arbeitsschritt zum Schneiden der geprägten (Wachs-)Lage auf eine gewünschte Länge mehr erforderlich ist. Die Länge der Mittelwand ist dadurch im Wesentlichen automatisch durch den Umfang der Walzen festgelegt.

Gemäß einer vorteilhaften Ausführung kann an zumindest einem axialen Walzenende an einer Stirnseite der Walze auch eine mit der Kammer kommunizierende Öffnung vorgesehen sein, wobei die Öffnung vorzugsweise durch einen Deckel verschließbar ist. Dadurch ist eine einfache Befüllung der Kammer mit Kühl- und/oder Trennmittel möglich. In einer einfachen Ausführungsform kann die Öffnung beispielsweise auch an einem oder beiden gegenüberliegenden Lagerzapfen ausgebildet sein. In diesem Fall kann die Walze in vorteilhafter Weise einteilig ausgebildet sein.

Gemäß einer bevorzugten Ausführungsform der Walze kann das freie Vorsprungsende zumindest eines wabenförmigen Vorsprungs pyramidenförmig ausgebildet sein, wobei der Verbindungskanal vorzugsweise in eine Spitze und/oder in zumindest eine Mantelfläche des pyramidenförmigen freien Vorsprungsendes mündet. Dadurch kann ein sehr realitätsnahes Wabenmuster auf der Mittelwand erzeugt werden und die Gefahr des Anhaftens am Vorsprung wird verringert.

Die erfindungsgemäße Walze wird bevorzugt in der eingangs genannten Vorrichtung zur Herstellung einer Mittelwand verwendet, wobei in der Vorrichtung vorzugsweise eine Antriebseinrichtung zum gegenläufigen Antrieb der Walzen vorgesehen ist. Die Antriebseinrichtung kann beispielsweise einen Kurbeltrieb zum manuellen Antrieb aufweisen und/oder kann eine elektrische Antriebseinheit aufweisen, vorzugsweise einen Elektromotor. Die Antriebseinrichtung kann gemäß einer vorteilhaften Ausführung dazu ausgebildet sein, ein Antriebsmoment auf eine der Walzen auszuüben und in der Vorrichtung kann weiters ein Getriebe vorgesehen sein, um das Antriebsmoment auf die zumindest eine weitere Walze zu übertragen.

Vorzugsweise kann der Achsabstand verstellbar sein, sodass eine Dicke der herzustellenden Mittelwand verändert werden kann.

In vorteilhafter Weise können die Walzen auch wechselbar in der Vorrichtung angeordnet sein. Dadurch können beispielsweise Walzen mit unterschiedlichen Wabenmustern einfach und schnell gewechselt werden und eine Walze kann einfach und rasch aus der Vorrichtung entnommen werden, um Kühl- und/oder Trennmittel in die Kammer zu füllen.

Gemäß einer weiteren vorteilhaften Ausführungsform ist in der Vorrichtung eine Zuführeinrichtung zum Zuführen von flüssigem Material zum Zwischenraum vorgesehen, wobei die Zuführeinrichtung vorzugsweise eine Heizeinrichtung zum Erhitzen des Materials und/oder eine Dosiereinrichtung zur Dosierung einer Menge des flüssigen Materials aufweisen kann. Durch eine Zuführeinrichtung kann ein kontrolliertes Zuführen des flüssigen Materials ermöglicht werden. Mittels einer Heizeinrichtung kann das Material beispielsweise verflüssigt und auf eine gewünschte Temperatur erhitzt werden. Mittels einer Dosiereinrichtung kann eine gewünschte Menge an flüssigem Material in den Zwischenraum bzw. Gusskanal eingebracht werden, beispielsweise die Menge für genau eine Mittelwand oder für eine gewünschte Anzahl von Mittelwänden.

Die Herstellung einer Mittelwand mittels der Vorrichtung erfolgt vorzugsweise durch folgende Schritte: Anordnen der Vorrichtung, sodass die Walzenachsen der beiden Walzen in horizontaler Richtung derart beabstandet sind, dass der Zwischenraum zwischen den Walzen einen Gusskanal bildet, Einbringen eines flüssigen Materials zur Ausbildung der Zwischenwand in einen Gusskanaleintritt des Gusskanals und gegenläufiges Drehen der Walzen. Je nach Wunsch, kann als flüssiges Material beispielsweise geschmolzenes Wachs, Kunststoff, Metall oder Harz verwendet werden, wobei aus oben genannten Gründen vorzugsweise Bienenwachs, besonders bevorzugt Eigenwachs verwendet wird. Um ein Anhaften des Materials an den Walzen zu verhindern und die Walzen zu kühlen kann es vorteilhaft sein, wenn in die Kammer zumindest einer Walze ein Trenn- und/oder Kühlmittel eingebracht wird, welches über die Verbindungskanäle den Vorsprungsende und/oder der Umfangsfläche zugeführt wird.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt
Fig.1a eine Vorrichtung zur Herstellung einer Mittelwand in einer Ansicht von oben mit einem Teilschnitt einer Walze,
Fig.1b einen Schnitt durch die in Fig.1a dargestellte Vorrichtung gemäß der Schnittlinie A-A,
Fig.2 eine Verwendung der Vorrichtung zur Herstellung einer Mittelwand,
Fig.3 eine mit der Vorrichtung hergestellte Mittelwand mit einem beidseitig angeordneten Wabenmuster.

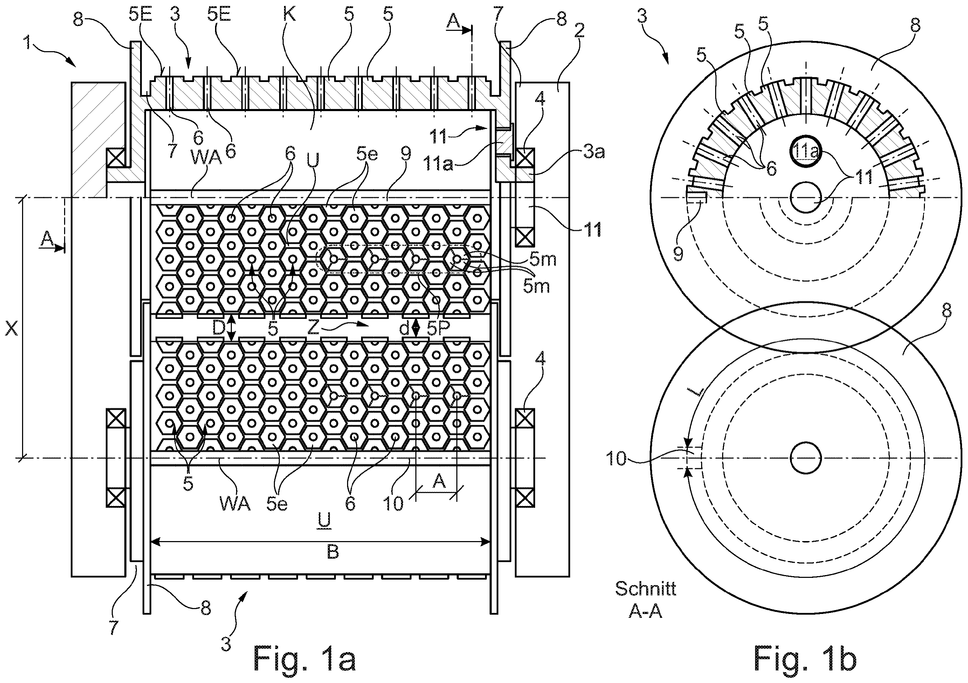

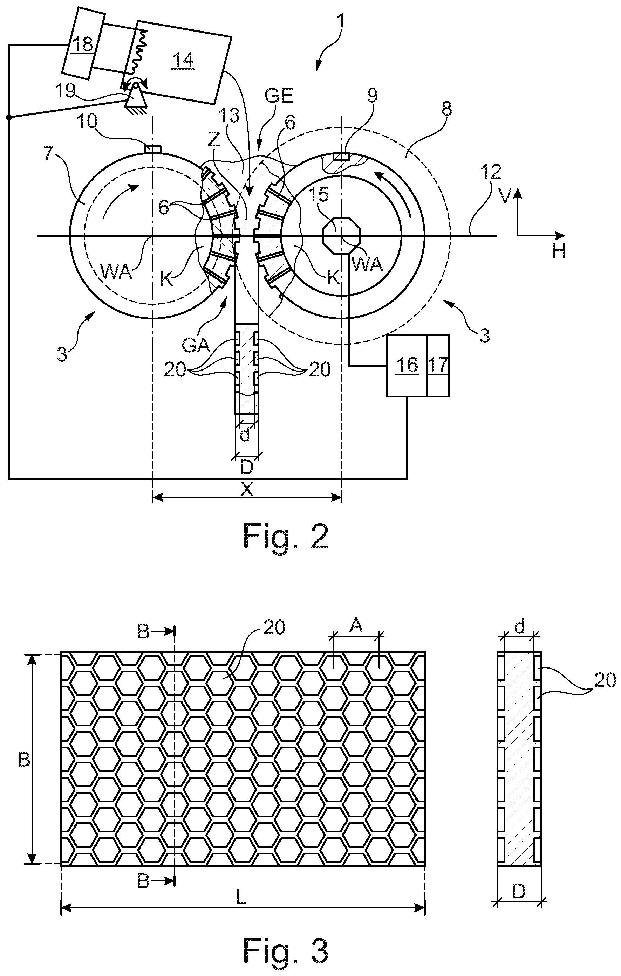

In Fig.1a ist eine Vorrichtung 1 zur Herstellung einer Mitteland 2 (siehe Fig.3) in einer vorteilhaften Ausführungsform dargestellt. Die Vorrichtung 1 dient dazu, eine Mittelwand M mit einem beidseitigen Wabenmuster zur Verwendung in einem Bienenstock herzustellen. Das Wabenmuster weist dabei vorzugsweise eine Mehrzahl von wabenförmigen Vertiefungen 20 auf, die vorzugsweise in einem regelmäßigen Muster verteilt an den gegenüberliegenden Flächen der Mittelwand M angeordnet sind, wie in Fig.3 dargestellt ist. In der Vorrichtung 1 sind zwei gegenläufig drehbare Walzen 3 mit parallelen Walzenachsen WA vorgesehen, wobei die Walzenachsen WA in einem vorgegebenen Achsabstand X voneinander beabstandet angeordnet sind, sodass zwischen einander zugewandten Abschnitten der äußeren Umfangsflächen U der Walzen 3 ein Zwischenraum Z ausgebildet ist. Der Zwischenraum Z dient als Gusskanal zur Einbringung eines flüssigen bzw. verflüssigtem Material 13 (Fig.2), aus dem die Mittelwand M hergestellt werden soll, wie anhand von Fig.2 später noch im Detail erläutert wird.

Die Walzen 3 können beispielswiese in geeigneter Weise in einem Rahmen 2 drehbar gelagert angeordnet sein. Dazu können an den gegenüberliegenden Stirnseiten der Walzen 3 beispielsweise Lagerzapfen 3a vorgesehen sein und am Rahmen können geeignete Wälzlager 4 vorgesehen sein. Um die gegenläufige Drehbewegung der Walzen 3 zu erzeugen ist in der Vorrichtung 1 vorzugsweise auch eine (nicht dargestellte) Antriebseinrichtung zum Antrieb der Walzen 3 vorgesehen. Die Antriebseinrichtung kann beispielsweise einen Kurbeltrieb zum manuellen Antrieb aufweisen. Zusätzlich oder alternativ kann die Antriebseinrichtung aber beispielsweise auch eine elektrische Antriebseinheit 15 aufweisen, vorzugsweise einen Elektromotor, wie in Fig.2 angedeutet ist. Die Antriebseinrichtung kann beispielsweise auch dazu ausgebildet sein, beide Walzen unmittelbar anzutreiben, um jeweils ein Antriebsmoment auf die beiden Walzen 3 auszuüben. Es kann aber auch ausreichend sein, wenn die Antriebseinrichtung dazu ausgebildet ist, das Antriebsmoment nur auf eine der Walzen 3 auszuüben und dass in der Vorrichtung 1 ein (nicht dargestelltes) Getriebe vorgesehen ist, um das Antriebsmoment auf die zweite Walze 3 zu übertragen. Das Getriebe kann beispielsweise einen Kettentrieb oder Zahnradantrieb oder dergleichen aufweisen.

Der Achsabstand X zwischen den Walzen 3 kann fix sein, kann aber auch veränderlich sein, beispielsweise um Walzen 3 mit verschiedenen Durchmessern verwenden zu können oder um eine Außendicke D zwischen gegenüberliegenden Außenflächen der Mittelwand M bzw. eine Kerndicke d zwischen gegenüberliegenden Waben (siehe auch Fig.2) der Mittelwand M einstellen zu können. Die Walzen 3 können entweder fest in der Vorrichtung 1, beispielsweise am Rahmen 2, verbaut sein, sodass diese nach der Herstellung der Vorrichtung 1 nicht mehr entnommen werden können. Die Walzen 3 können aber auch wechselbar in der Vorrichtung 1, insbesondere im Rahmen 2, angeordnet sein. Das kann z.B. vorteilhaft sei, um Walzen 3 mit verschiedenen Wabenmustern verwenden zu können oder um eine defekte Walze 3 auszutauschen.

An der äußeren Umfangsfläche U der Walzen 3 ist jeweils eine Mehrzahl von wabenförmigen Vorsprüngen 5 zur Ausbildung des Wabenmusters auf der Mittelwand M vorgesehen. Die Vorsprünge 5 sind vorzugsweise so angeordnet, dass das erzeugbare Wabenmuster eine möglichst realistische Nachbildung des Wabenmusters ist, das die Bienen in der Natur erzeugen. Die Größe der Waben wird durch das sogenannte Zellmaß A bestimmt, das die Behausungsgröße für die Bienen festlegt und in weiterer Folge auch die Körpergröße der Bienen beeinflusst. Gängige Werte für das Zellmaß A betragen im Bereich von 4,9mm bis 5,4mm. Unter dem Zellmaß A ist dabei der Abstand zwischen den Mittelpunkten benachbarter Waben zu verstehen und folglich der Abstand zwischen den Mittelpunkten benachbarter wabenförmiger Vorsprünge 5 der Walze 3, wie in Fig.1a an der unteren Walze 3 sowie in Fig.3 angedeutet ist. Unter einem wabenförmigen Vorsprung 5 ist im Wesentlichen ein Prisma mit einem sechseckigen Querschnitt und einer bestimmten Höhe zu verstehen.

Das Zellmaß A der Vorsprünge 5 einer Walze 3 kann je nach Anforderungen des jeweiligen Imkers angepasst werden. In Fig.1a ist an der Umfangsfläche U der oberen Walze 3 lediglich beispielhaft ein regelmäßiges Wabenmuster dargestellt. Natürlich könnte das Wabenmuster in der Praxis auch anders aussehen und beispielsweise unregelmäßig angeordnete Vorsprünge 5 aufweisen. Jeder wabenförmige Vorsprung 5 weist an seiner, der äußeren Umfangsfläche U der jeweiligen Walze 3 abgewandten Seite, ein freies Vorsprungsende 5E auf. Am freien Vorsprungsende 5E kann beispielsweise eine ebene Endfläche vorgesehen sein oder es könnte auch eine gewisse Struktur oder eine Vertiefung vorgesehen sein, um eine natürliche Bienenwabe möglichst realistisch nachzubilden. Beispielsweise könnte das freie Vorsprungsende 5E auch pyramidenförmig ausgebildet sein und eine Anzahl von z.B. drei Mantelflächen 5m aufweisen, wie in Fig.1a an den vier Vorsprüngen 5P angedeutet ist.

Erfindungsgemäß ist in zumindest einer der Walzen 3, vorzugsweise an beiden Walzen 3, zumindest eine Kammer K zur Aufnahme eines Trenn- und/oder Kühlmittels vorgesehen. Die Kammer K erstreckt sich vorzugsweise zumindest über einen Teil einer Walzenlänge der Walze 3 in Richtung der Walzenachse WA. An der Walze 3 ist weiters zumindest ein Verbindungskanal 6 vorgesehen ist, der die Kammer K mit dem freien Vorsprungsende 5E zumindest einer der wabenförmigen Vorsprünge 5 und/oder mit der äußeren Umfangsfläche U der Walze 3 verbindet. Im dargestellten Beispiel sind die Walzen 3 zylindrisch, insbesondere hohlzylindrisch, sodass im zylindrischen Hohlraum des Hohlzylinders die Kammer K ausgebildet ist. Der zylindrische Hohlraum erstreckt sich dabei vorzugsweise zumindest über den Teil der Walzenlänge, an dem die Verbindungskanäle 6 angeordnet sind, sodass diese vorzugsweise radial in die Kammer K münden, wie in Fig.1a und der Schnittdarstellung in Fig.1b ersichtlich ist. Der Verbindungskanal 6 mündet dabei vorzugsweise zentral am freien Vorsprungsende 5E. Wenn das freie Vorsprungsende beispielsweise pyramidenförmig ausgebildet ist, dann kann der Verbindungskanal 6 beispielsweise an der Spitze münden, wie an den vier Vorsprüngen 5P in Fig.1a dargestelt ist. Alternativ oder zusätzlich kann der Verbindungskanal 6 natürlich auch an einer Mantelfläche 5m des pyramidenförmigen Vorsprungsendes 5E münden oder der Verbindungskanal 6 könnte auch mehrere Kanalenden aufweisen, die jeweils in eine der Mantelflächen 5m münden.

Besonders bevorzugt ist zumindest ein Verbindungskanal 6, vorzugsweise mehrere, besonders bevorzugt alle Verbindungskanäle 6, als Kapillare ausgebildet. Dadurch kann das in der Kammer K vorgesehene Trenn- und/oder Kühlmittel während der Herstellung der Mittelwand M durch die Kapillarwirkung nach außen transportiert werden, ohne dass eine separate Fördereinrichtung, wie z.B. eine Pumpe, nötig ist. Dadurch kann die Vorrichtung 1 einfach und kostengünstig hergestellt werden. Durch die Zufuhr von Trenn- und/oder Kühlmittel zum offenen Kanalende am freien Vorsprungsende 5E kann ein Anhaften des Mittelwand-Materials am Vorsprung 5 verhindert werden. Zudem kann eine verbesserte Kühlung der Walze 3 und folglich der Mittelwand M gewährleistet werden.

Um eine ausreichende Kapillarwirkung zu erzeugen beträgt der Durchmesser der Verbindungskanäle 6 vorzugsweise maximal 0,5mm, besonders bevorzugt maximal 0,2mm, ganz besonders bevorzugt maximal 0,05mm. Daraus ist ersichtlich, dass die Herstellung der Verbindungskanäle 6 mittels herkömmlicher Verfahren, insbesondere mittels spanender Bearbeitung wie Bohren oder Fräsen, nicht oder nur mit sehr großem Fertigungsaufwand möglich ist. Gemäß einer bevorzugten Ausführungsform ist daher zumindest der Teil der Walze 3, an dem der zumindest eine Verbindungskanal 6 vorgesehen ist, durch ein additives Fertigungsverfahren hergestellt, vorzugsweise durch 3D-Druck. Dadurch kann der Verbindungskanal 6 in einfacher Weise direkt während bei der Herstellung der Walze 3 im Walzenmaterial ausgespart werden, wobei natürlich auch eine Vielzahl von Verbindungskanälen 6 erzeugt werden kann. Geeignete Materialien für die additive Fertigung sind insbesondere Kunststoffe, aber auch Kunstharze oder Metalle. Für kleine Betriebe bietet sich insbesondere die Herstellung mittels handelsüblicher 3D-Drucker an, die in der Regel Kunststoffe verwenden. Durch die Verwendung eines additiven Fertigungsverfahrens können die Walzen 3 in vorteilhafter Weise auch einteilig ausgebildet sein, wodurch der Montageaufwand der Vorrichtung 1 reduziert werden kann.

Natürlich kann die Walze 3 grundsätzlich auch aus anderen Werkstoffen hergestellt werden, die nicht oder nur eingeschränkt für die Herstellung mittels additiven Fertigungsverfahren geeignet sind, beispielsweise aus Metall, Kunstharz, Holz, Keramik oder aus geeigneten Verbundstoffen wie z.B. faserverstärkten Kunststoffen. Neben additiven Fertigungsverfahren können grundsätzlich auch andere bekannte Fertigungsverfahren zur Herstellung der Walze 3 verwendet werden, beispielsweise Spritzguss, Druckguss, spanende Herstellung (Drehen, Fräsen), usw. Allgemein richtet sich die Materialwahl für die Walze 3 nach dem Material 13, aus dem die Mittelwand M hergestellt wird. Nachdem das der Verwendung der Vorrichtung 1 der zur Erzeugung der Mittelwand M verwendete Material 13 in zumindest teilweise flüssiger Form in den als Gusskanal fungierenden Zwischenraum Z eingebracht wird, sollte das Material der Walze 3 dazu geeignet sein, den erwarteten Temperaturen des eingebrachten flüssigen (geschmolzenen) Materials 13 standzuhalten. Während für die bevorzugte Verwendung von geschmolzenem (Eigen-)wachs zur Herstellung der Mittelwand M Kunststoff eine ausreichende Temperaturstabilität hat, könnte es beispielsweise bei der Verwendung von Metallen mit deutlich höherem Schmelzpunkt als Wachs erforderlich sein, die Walze 3 aus einem anderen Werkstoff mit entsprechend höherer Temperaturstabilität herzustellen.

Gemäß einer vorteilhaften Ausführungsform sind an den Walzen 3 im Bereich der axialen Walzenenden jeweils ein scheibenförmiger Vorsprung 8 und/oder eine Umfangsnut 7 vorgesehen. Die Walzen 3 sind dabei so ausgebildet, dass der scheibenförmige Vorsprung 8 einer Walze 3 komplementär zur Umfangsnut 7 der jeweils anderen Walze 3 ausgebildet ist. Dadurch greifen die korrespondierenden Vorsprünge 8 und Umfangsnuten 7 ineinander und begrenzen den Zwischenraum Z bzw. den Gusskanal in axialer Richtung, wie in Fig.1a ersichtlich ist. Dadurch kann bei der Herstellung einer Mittelwand M einerseits eine gleichmäßige Zufuhr von flüssigem Material 13 gewährleistet werden. Andererseits kann eine Breite B der Mittelwand M automatisch auf die Breite des Zwischenraums Z begrenzt werden, wie in Fig.1a angedeutet ist. Übliche Breiten B von Mittelwänden M betragen beispielsweise 110mm bis 295mm.

Im dargestellten Beispiel in Fig.1a sind an jedem Walzenende beider Walzen 3 ein scheibenförmiger Vorsprung 8 und eine Umfangsnut 7 nebeneinander vorgesehen. An der in Fig.1a oberen Walze 3 liegen die Umfangsnuten 7 in axialer Richtung innerhalb der Vorsprünge 8 und an der unteren Walze liegen die Vorsprünge 8 in axialer Richtung innerhalb der Umfangsnuten 7. Die in axialer Richtung dem jeweiligen Vorsprung 8 abgewandte Seite der Umfangsnuten 7 der unteren Walze 3 sind hier offen, sodass die Nuten 7 im Wesentlichen einem radialen Absatz entsprechen. Natürlich könnten die Nuten 7 an der unteren Walze 3 aber auch in axialer Richtung gesehen an beiden Seiten durch eine Flanke begrenzt sein. Die beiden in Fig.1a dargestellten Walzen 3 sind somit hinsichtlich der Vorsprünge 8 und Nuten 7 nicht identisch ausgeführt. Natürlich wäre es aber auch denkbar, dass die Walzen 3 diesbezüglich identisch ausgeführt sind und beispielsweise mit einem geringen axialen Versatz in der Vorrichtung 1 angeordnet sind, sodass die Vorsprünge 8 in die Nuten 7 eingreifen. Es wäre auch denkbar, dass die Walzen 3 identisch ausgebildet sind, wobei an einem Walzenende ein scheibenförmiger Vorsprung 8 ohne Umfangsnut 7 vorgesehen ist und am gegenüberliegenden Walzenende eine Umfangsnut 7 ohne Vorsprung 8 vorgesehen ist. Die beiden Walzen 3 könnten in diesem Fall gegengleich in der Vorrichtung 1 angeordnet sein, sodass jeweils der scheibenförmige Vorsprung 8 der einen Walze 3 in die Umfangsnut 7 der anderen Walze eingreift.

Gemäß einer weiteren vorteilhaften Ausführungsform ist an der äußeren Umfangsfläche U einer Walze 3 zumindest eine Längsnut 9 vorgesehen, welche gegenüberliegende axiale Walzenenden der Walze 3 verbindet und/oder es ist an der äußeren Umfangsfläche U der Walze 3 zumindest eine Feder 10 vorgesehen, welche die gegenüberliegenden Walzenenden der Walze 3 verbindet. Im dargestellten Beispiel ist an der unteren Walze 3 eine Feder 10 vorgesehen, welche die beiden gegenüberliegenden scheibenförmigen Vorsprünge 8 der Walze 3 verbindet. An der oberen Walze 3 ist eine zur Feder 10 der unteren Walze 3 komplementäre Längsnut 9 vorgesehen, welche die beiden gegenüberliegenden Umfangsnuten 7 verbindet. Die Feder 10 und die Längsnut 9 snd dabei vorzugsweise parallel zur Walzenachse WA der entsprechenden Walze 3 angeordnet.

Die Längsnut 9 und die Feder 10 sind so angeordnet, dass sie im Betrieb der Vorrichtung 1 in jeder Umdrehung der Walzen 3 einmal ineinander eingreifen. Dadurch kann die Mittelwand M im Betrieb automatisch auf eine bestimmte Länge L zugeschnitten werden, die im Wesentlichen dem Umfang der Walzen 3 abzüglich der Breite der Feder 10 entspricht, wie in Fig.1b angedeutet ist. Somit wird je Umdrehung der Walzen 3 eine Mittelwand M hergestellt. Gängige Längen L von Mittelwänden M betragen beispielsweise 110mm bis 425mm. Wenn der Umfang der Walzen 3 größer als die gewünschte Länge L der Mittelwand M ist, dann könnten beispielsweise auch mehrere komplementäre Nuten 9 und Federn 10 in Umfangsrichtung beabstandet an den Walzen 3 vorgesehen sein.

Optional kann an zumindest einem axialen Walzenende einer Walze 3, an einer Stirnseite der Walze 3 eine mit der Kammer K kommunizierende Öffnung 11 vorgesehen sein, wobei die Öffnung 11 vorzugsweise durch einen Deckel 11a verschließbar ist, wie in Fig.2a angedeutet ist. Dadurch kann die Kammer K in einfacher Weise mit einem Kühl- und/oder Trennmittel befüllt werden und mittels des Deckels 11a vorzugsweise dicht verschlossen werden. In einer einfachen Ausgestaltung der Walze 3, beispielsweise bei einer einstückigen Ausführung der Walze 3, könnte die Öffnung 11 aber beispielsweise auch an einem oder an beiden Lagerzapfen 3a der Walze 3 vorgesehen sein, wie ebenfalls in Fig.1a dargestellt ist. Die Öffnung 11 kann beispielsweise koaxial zur Walzenachse WA verlaufen, um die Kammer K mit der Umgebung zu verbinden. Öffnung 11 könnte in diesem Fall im Betrieb der Vorrichtung 1 durch den Rahmen 2 verschlossen werden oder könnte durch eine Öffnung im Rahmen 2 zugänglich sein.

Anhand Fig.2 wird nachfolgend die Verwendung der Vorrichtung 1 zur Herstellung einer Mittelwand M für einen Bienenstock näher erläutert. Der Einfachheit halber sind in Fig.2 lediglich die beiden Walzen 3 schematisch dargestellt. Zunächst wird die Vorrichtung 1 so angeordnet, sodass die Walzenachsen WA der beiden Walzen 3 in horizontaler Richtung derart beabstandet sind, dass der Zwischenraum Z zwischen den Walzen 3 einen Gusskanal bildet. Im dargestellten Beispiel ist die Vorrichtung 1 so angeordnet, dass eine gedachte Ebene 12, in der die beiden Walzenachsen WA liegen, in der Horizontalen liegt, sodass der Gusskanal in Richtung der Vertikalen V verläuft, wie durch das Koordinatenkreuz angedeutet ist. Natürlich wäre aber auch eine gewisse Neigung der Vorrichtung 1 denkbar, sodass die Ebene 12 nicht vollständig in der Horizontalen H liegt. Der Gusskanal ist damit so ausgerichtet, dass flüssiges Material 13 von oben in einen Gusskanaleintritt GE eingebracht werden kann. An der Unterseite des Gusskanals kann eine fertige Mittelwand M mit vorzugsweis beidseitig eingeprägtem Wabenmuster, das eine Mehrzahl von einzelnen Waben 20 aufweist, aus einem Gusskanalaustritt GA entnommen werden. Die Vorrichtung 1 wird dabei natürlich vorzugsweise so positioniert, dass am Gusskanalaustritt GA ausreichend Platz für eine fertige Mittelwand M ist.

Im nächsten Schritt wird ein geeignetes flüssiges Material 13 zur Ausbildung der Mittelwand M in den Gusskanaleintritt GE des Gusskanals eingebracht. Wie bereits erwähnt, können verschiedenste Materialien verwendet werden, z.B. Kunststoff, Metall oder Kunstharz, wobei geschmolzenes Wachs, vorzugsweise Bienenwachs, besonders bevorzugt Eigenwachs bevorzugt wird. Dazu kann beispielsweise ein festes Material 13 zuvor in geeigneter Weise erhitzt und dadurch verflüssigt werden. Das verflüssigte Material 13 kann beispielsweise mittels einer geeigneten Zuführeinrichtung 14 von oben in den Gusskanal eingebracht werden. Wie erwähnt ist es vorteilhaft, wenn der Gusskanal in axialer Richtung durch Vorsprünge 8 bzw. Nuten 7 begrenzt ist, sodass das verflüssigte Material 13 an den Walzenenden nicht austreten kann.

In einer einfachen Ausführung könnte als Zuführeinrichtung 14 beispielsweise ein separater Behälter verwendet werden, der nicht Teil der Vorrichtung 1 ist. Das flüssige Material 13 kann mittels des Behälters beispielsweise manuell durch eine Person in den Gusskanal eingebracht werden. In einer erweiterten Ausführungsform könnte die Zuführeinrichtung 14 aber auch ein Teil der Vorrichtung 1 sein und könnte optional z.B. auch eine Heizeinrichtung 18 zum Erhitzen des Materials 13 und/oder eine Dosiereinrichtung 19 zum kontrollierten Dosieren der eingebrachten Menge an flüssigem Material 13 aufweisen. Die Zuführeinrichtung 14 könnte z.B. einen Behälter umfassen und die Dosiereinrichtung 19 könnte z.B. einen Schwenkmechanismus zum Kippen des Behälters umfassen. Die Zuführeinrichtung 14 könnte aber beispielsweise auch einen Extruder aufweisen.

In einem nächsten Schritt erfolgt ein gegenläufiges Drehen der Walzen 3, wie durch die beiden Pfeile angedeutet ist. An dieser Stelle sei jedoch erwähnt, dass der Schritt des Drehens der Walzen 3 natürlich nicht zwingend nach dem Einbringen des flüssigen Materials 13 erfolgen muss, sondern beispielsweise auch davor oder zeitgleich erfolgen kann. Wie erwähnt ist es vorteilhaft, wenn an einer Walze 3 eine Längsnut 9 vorgesehen ist und an der anderen Walze eine dazu komplementäre Feder 10 vorgesehen ist, die je Umdrehung einmal ineinander eingreifen. Dadurch kann automatisch die Länge L der hergestellten Mittelwand M festgelegt werden.

Das Drehen erfolgt vorzugsweise durch die bereits beschriebene Antriebseinrichtung. Die Antriebseinrichtung kann in einer einfachen Ausführung beispielsweise einen Kurbeltrieb aufweisen, um eine der Walzen 3 manuell anzutreiben. Die zweite Walze 3 kann beispielsweise über ein geeignetes Getriebe von der ersten Walze 3 angetrieben werden. Die Antriebseinrichtung kann aber beispielsweise auch eine elektrische Antriebseinheit 15 aufweisen, mit der ein Antriebsmoment auf zumindest eine Walze 3 ausgeübt werden kann, z.B. ein Elektromotor. Das Antriebsmoment kann wiederum durch ein Getriebe auf die zweite Walze 3 übertragen werden. Natürlich könnte auch je Walze 3 eine separate elektrische Antriebseinheit 15 vorgesehen sein.

Die Energieversorgung könnte beispielsweise über einen geeigneten Energiespeicher wie z.B. eine Batterie erfolgen, wodurch ein autarker Betrieb der Vorrichtung 1 unabhängig vom Stromnetz ermöglicht werden kann. Zusätzlich oder alternativ kann die Energieversorgung aber natürlich auch über das (Haushalts-)Stromnetz erfolgen. In einer einfachen Ausführung könnte die elektrische Antriebseinheit 15 beispielsweise so ausgebildet sein, dass lediglich ein Betriebsmodus ausgeführt werden kann, also ein Ein-/Aus Betrieb, z.B. mit einer festgelegten Drehzahl und/oder einem festgelegten Antriebsmoment.

In einer erweiterten Ausführung wären aber auch mehrere Betriebsmodi denkbar, beispielsweise verschiedene Drehzahlen und/oder Antriebsmomente. Dazu kann in der Vorrichtung 1 beispielsweise eine geeignete Steuerungseinheit 16 vorgesehen sein, welche die elektrische Antriebseinheit 15 ansteuert. Die Steuerungseinheit 16 kann beispielsweise optional auch eine Benutzerschnittstelle 17 aufweisen, über welche die verschiedenen Betriebsmodi gewählt werden können. Weiters könnte beispielsweise auch eine Sicherheitseinrichtung in der Vorrichtung 1 vorgesehen sein, die ein rasches Abschalten der elektrischen Antriebseinheit 15 bewirkt, wie z.B. ein Not-Aus-Schalter.

Die Sicherheitseinrichtung könnte aber auch eine geeignete Sensorik aufweisen, um ein automatisches Abschalten der elektrischen Antriebseinheit 15 zu bewirken, wenn ein bestimmter Fehlerfall vorliegt. Z.B. könnte ein geeigneter Kraftsensor, Drehmomentsensor, Drehzahlsensor oder Stromsensor vorgesehen sein, der ein Sensorsignal an die Steuerungseinheit 16 übermittelt und die Steuerungseinheit 16 kann die elektrische Antriebseinheit 15 abschalten, wenn ein bestimmter Schwellenwert unterschritten (Drehzahl) oder überschritten (Kraft, Drehmoment, Strom) wird. Dadurch kann einerseits eine Beschädigung der Vorrichtung 1 vermieden werden, beispielsweise weil das eingebrachte Material 13 zu hart ist und/oder es können Verletzungen verhindert werden, z.B. ein Einklemmen von Gliedmaßen oder Kleidungsstücken. Natürlich wären auch weitere oder andere geeignete Sensoren denkbar, wie z.B. akustische oder optische Sensoren.

Die Steuerungseinheit 16 könnte beispielsweise auch dazu ausgebildet sein, die Zuführeinrichtung 14 zu steuern, beispielsweise die Heizeinrichtung 18 und/oder den Schwenkmechanismus oder einen Extruder. Über die Benutzerschnittstelle 17 könnten beispielsweise Temperatur und Menge des flüssigen Materials 13 eingestellt werden, sodass z.B. ein teilautomatisierter Betrieb möglich ist. Wenn der Achsabstand X der Walzen 3 verstellbar ist, wäre es auch denkbar, dass in der Vorrichtung 1 eine (nicht dargestellte) Verstelleinrichtung zur Verstellung des Achsabstands X vorgesehen ist, die von der Steuerungseinheit 16 ansteuerbar ist. Dadurch kann beispielsweise die Außdendicke D und folglich die Kerndicke d der Mittelwand M eingestellt werden.

In vorteilhafter Weise wird in die Kammer K zumindest einer Walze 3, vorzugsweise beider Walzen 3, ein Trenn- und/oder Kühlmittel eingebracht. Als Trenn- und/oder Kühlmittel kann beispielsweise ein Gemisch aus Alkohol und Honig oder gesättigtes Salzwasser verwendet werden. Die Verwendung von Alkohol ist dabei vorteilhaft, um den Gefrierpunkt unter 0°C zu senken, wodurch eine Art Frostschutz resultiert. Honig fungiert dabei als natürliches Trennmittel, das in einer Imkerei leicht verfügbar ist. Alternativ kann aber auch eine Öl-Emulsion auf Alkoholbasis verwendet werden. Die Einbringung erfolgt dabei vorzugsweise vor Inbetriebnahme der Vorrichtung 1. Wenn eine Öffnung 11 (Fig.1a+1b) an den Walzen 3 vorgesehen ist, dann könnte eine Befüllung der Kammer/n K ggf. auch während des Betriebs erfolgen oder zumindest ohne Ausbau der Walzen 3. Durch die Drehung der Walzen 3 werden die Verbindungskanäle 6 mit dem Trenn- und/oder Kühlmittel aus der Kammer K versorgt. Durch die vorzugsweise Ausgestaltung der Verbindungskanäle 6 als Kapillare, wird das Verbindungskanäle 6 durch die Kapillarwirkung automatisch in Richtung der Vorsprungsenden 3e bzw. der äußeren Umfangsfläche U der Walzen 3 transportiert und der Oberfläche des eingebrachten Materials 13 zugeführt. Dadurch wird ein Anhaften des Materials 13 an den Walzen zuverlässig verhindert und zusätzlich werden die Walzen 3 gekühlt.

In Fig.3 ist schließlich eine Mittelwand M dargestellt, die mittels der Vorrichtung 1 hergestellt wurde. Links ist die Mittelwand in einer Draufsicht dargestellt und rechts ein Schnitt gemäß der Schnittlinie B-B. Die Mittelwand M ist vorzugsweise rechteckig und weist vorzugsweise eine Länge L im Bereich von 110mm bis 425mm sowie eine Breite B im Bereich von 110mm bis 295mmauf. Eine Außendicke D der Mittelwand beträgt vorzugsweise 1mm bis 3mm und eine Kerndicke d zwischen zwei gegenüberliegenden Waben 20 beträgt vorzugsweise im Bereich von 0,1mm-1,5mm. Das Wabenmuster hängt von der Anordnung der wabenförmigen Vorsprünge 5 an den Walzen 3 ab und kann regelmäßig sein, wie in Fig.3 dargestellt, könnte aber natürlich auch unregelmäßig sein. Das Wabenmuster kann beispielsweise gemäß der Offenbarung der DE 415651 ausgebildet sein. Im dargestellten Beispiel in Fig.3 sind die Waben 20 (entsprechend der konstruktiven Ausgestaltung der Walzen 3) so angeordnet, dass gegenüberliegende obere und untere Seitenflächen parallel zur langen Seite der Mittelwand M verlaufen. Das ist natürlich nur beispielhaft und die Waben 20 könnten auch in einem bestimmten Winkel, beispielsweise 45°, gedreht angeordnet sein, sodass gegenüberliegende Seitenflächen parallel zur kurzen Seite der Mittelwand M verlaufen.

Ein Zellmaß A der Waben 20 beträgt vorzugsweise im Bereich von 3mm bis 10mm, besonders bevorzugt im Bereich von 4,7 bis 5,5mm. Bei einem Zellmaß von A=5,4mm kann eine Wabendichte Ω beispielsweise im Bereich von 700 bis 750 Waben pro dm² betragen, bei einem Zellmaß von A=5,1mm kann die Wabendichte Ω beispielsweise im Bereich von 880 Waben pro dm² betragen und bei einem Zellmaß von A=4,9mm kann die Wabendichte Ω beispielsweise im Bereich von 950 Waben pro dm² betragen. Die Gesamtanzahl N von Waben 20 je Mittelwand hängt im Wesentlichen von dem verwendeten Wabenrähmchen ab und kann somit unterschiedlich sein. Bei einer Wabendichte Ω=750 kann die Anzahl N von Waben 20 je Mittelwand z.B. für das Deutsch-Normal-Maß z.B. N=5868 betragen, für das Zander-Maß N=6855, für das modifizierte Dadant-Maß N= 9182, für das Dadant Blatt Maß N= 9450, für das Langstroth-Maß N=7342 und für das Kuntsch-Maß N= 6142. Natürlich sind diese Zahlen lediglich beispielhaft und es wären natürlich auch andere konstruktive Ausgestaltungen denkbar.

Je nach gewünschtem Wabenmuster können gegenüberliegende Waben 20 beispielsweise kongruent oder versetzt zueinander angeordnet sein. Der Wabengrund der Waben 20 hängt dabei von der konstruktiven Ausgestaltung der wabenförmigen Vorsprünge 5, insbesondere der freien Vorsprungsenden 5E, ab. Im dargestellten Beispiel weisen die Waben 20 beispielsweise jeweils einen ebenen Wabengrund auf, da die freien Vorsprungsenden 5E der Vorsprünge 5 der Walzen 3 eine ebene Fläche aufweisen. Wenn das freie Vorsprungsende 5E der wabenförmigen Vorsprünge 5 beispielsweise pyramidenförmig ausgebildet sind, wie anhand der Vorsprünge 5P in Fig.1a angedeutet ist, dann wäre der Wabengrund der Waben 20 beispielsweise entsprechend negative pyramidenförmig ausgebildet.

Abschließend sei erwähnt, dass die beschrieben Ausführungsform natürlich nur beispielhaft und nicht einschränkend zu verstehen ist und dass der Fachmann unter Nutzung seines Fachwissens an gewünschte Anforderungen anpassen kann. Beispielsweise wäre ein beliebig anderes Wabenmuster denkbar oder eine andere Form, Größe oder Anzahl der Vorsprünge 5 an den Walzen 3 möglich.

## Patentansprüche

1. Walze (3) zur Verwendung in einer Vorrichtung (1) zur Herstellung einer, ein Wabenmuster aufweisenden, Mittelwand (M) für einen Bienenstock, wobei an einer äußeren Umfangsfläche (U) der Walze (3) eine Mehrzahl von wabenförmigen Vorsprüngen (5) zur Ausbildung des Wabenmusters auf der Mittelwand (M) vorgesehen ist, wobei jeder wabenförmige Vorsprung (5) an seiner, der äußeren Umfangsfläche (U) der Walze (3) abgewandten Seite, ein freies Vorsprungsende (5E) aufweist, **dadurch gekennzeichnet, dass** innerhalb der Walze (3) zumindest eine Kammer (K) zur Aufnahme eines Trenn- und/oder Kühlmittels vorgesehen ist **und dass** an der Walze (3) zumindest ein Verbindungskanal (6) vorgesehen ist, der die Kammer (K) mit dem freien Vorsprungsende (5E) zumindest einer der wabenförmigen Vorsprünge (5) und/oder mit der äußeren Umfangsfläche (U) der Walze (3) verbindet.

2. Walze (3) nach Anspruch 1, **dadurch gekennzeichnet, dass** zumindest ein Verbindungskanal (6) als Kapillare ausgebildet ist.

3. Walze (3) nach Anspruch 1 oder 2, **dadurch gekennzeichnet, dass** zumindest der Teil der Walze (3), an dem der zumindest eine Verbindungskanal (6) vorgesehen ist, durch ein additives Fertigungsverfahren hergestellt ist, vorzugsweise durch 3D-Druck.

4. Walze (3) nach einem der Ansprüche 1 bis 3, **dadurch gekennzeichnet, dass** die Walze (3) zylindrisch ist, wobei die Walze (3) vorzugsweise hohlzylindrisch ist, um die Kammer (K) in einem Hohlraum der hohlzylindrischen Walze (3) auszubilden.

5. Walze (3) nach einem der Ansprüche 1 bis 4, **dadurch gekennzeichnet, dass** an der Walze (3) im Bereich zumindest eines axialen Walzenendes, vorzugsweise im Bereich beider axialer Walzenenden, zumindest ein scheibenförmiger Vorsprung (8) und/oder zumindest eine Umfangsnut (7) vorgesehen sind.

6. Walze (3) nach einem der Ansprüche 1 bis 5, **dadurch gekennzeichnet, dass** an der äußeren Umfangsfläche (U) der Walze (3) zumindest eine Längsnut (9) vorgesehen ist, welche gegenüberliegende axiale Walzenenden der Walze (3) verbindet und/oder dass an der äußeren Umfangsfläche (U) der Walze (3) zumindest eine Feder (10) vorgesehen ist, welche gegenüberliegende Walzenenden der Walze (3) verbindet, wobei die Längsnut (9) und/oder die Feder (10) vorzugsweise parallel zur Walzenachse der Walze (3) verlaufen.

7. Walze (3) nach einem der Ansprüche 1 bis 6, **dadurch gekennzeichnet, dass** an zumindest einem axialen Walzenende an einer Stirnseite der Walze (3) eine mit der Kammer (K) kommunizierende Öffnung (11) vorgesehen ist, wobei die Öffnung (11) vorzugsweise durch einen Deckel (11a) verschließbar ist.

8. Walze (3) nach einem der Ansprüche 1 bis 7, **dadurch gekennzeichnet, dass** das freie Vorsprungsende (5E) zumindest eines wabenförmigen Vorsprungs (5) pyramidenförmig ausgebildet ist, wobei der Verbindungskanal (6) vorzugsweise in eine Spitze und/oder in zumindest eine Mantelfläche des pyramidenförmigen freien Vorsprungsendes (5E) mündet.

9. Vorrichtung (1) zur Herstellung einer, ein Wabenmuster aufweisende, Mittelwand (M) für einen Bienenstock, wobei in der Vorrichtung (1) zwei gegenläufig drehbare Walzen (3) mit parallelen Walzenachsen (WA) vorgesehen sind, wobei die Walzenachsen (WA) in einem vorgegebenen Achsabstand (X) voneinander beabstandet angeordnet sind, sodass zwischen einander zugewandten Abschnitten der äußeren Umfangsflächen (U) der Walzen (3) ein Zwischenraum (Z) ausgebildet ist, **dadurch gekennzeichnet, dass** zumindest eine der Walzen nach einem der Ansprüche 1 bis 8 ausgebildet ist.

10. Vorrichtung (1) nach Anspruch 9, **dadurch gekennzeichnet, dass** in der Vorrichtung (1) eine Antriebseinrichtung zum Antrieb der Walzen (3) vorgesehen ist, wobei die Antriebseinrichtung vorzugsweise einen Kurbeltrieb zum manuellen Antrieb und/oder eine elektrische Antriebseinheit (15), vorzugsweise einen Elektromotor, aufweist, wobei vorzugsweise die Antriebseinrichtung dazu ausgebildet ist, ein Antriebsmoment auf eine der Walzen (3) auszuüben und das Antriebsmoment über ein Getriebe der Vorrichtung (1) auf die zumindest eine weitere Walze (3) zu übertragen.

11. Vorrichtung (1) nach Anspruch 9 oder 10, **dadurch gekennzeichnet, dass** der Achsabstand (X) verstellbar ist.

12. Vorrichtung (1) nach einem der Ansprüche 9 bis 11, **dadurch gekennzeichnet, dass** in der Vorrichtung (1) eine Zuführeinrichtung (14) zum Zuführen von flüssigem Material (13) zum Zwischenraum (Z) vorgesehen ist, wobei die Zuführeinrichtung (14) vorzugsweise eine Heizeinrichtung (18) zum Erhitzen des Materials (13) und/oder eine Dosiereinrichtung (19) zur Dosierung einer Menge des flüssigen Materials (13) aufweist.

13. Verwendung der Vorrichtung (1) nach einem der Ansprüche 9 bis 12 zur Herstellung einer, ein Wabenmuster aufweisende, Mittelwand (M) für einen Bienenstock, wobei folgende Schritte durchgeführt werden:
- Anordnen der Vorrichtung (1), sodass die Walzenachsen (WA) der Walzen (3) in horizontaler Richtung derart beabstandet sind, dass der Zwischenraum (Z) zwischen den Walzen einen Gusskanal mit einem Gusskanaleintritt (GE) und einem Gusskanalaustritt (GA) gebildet wird,
- Einbringen eines flüssigen Materials (13) zur Ausbildung der Mittelwand in den Gusskanaleintritt (GE) des Gusskanals,
- gegenläufiges Drehen der Walzen (3).

14. Verwendung nach Anspruch 13, wobei in die Kammer (K) zumindest einer Walze (3) ein Trenn- und/oder Kühlmittel eingebracht wird.

15. Verwendung nach Anspruch 13 oder 14, wobei als flüssiges Material (13) geschmolzenes Wachs, Kunststoff, Metall oder Harz verwendet wird, vorzugsweise Bienenwachs, besonders bevorzugt Eigenwachs.

## Claims

1. Roller (3) for use in a device (1) for producing a foundation sheet (M) for a beehive, which has a honeycomb pattern, wherein a plurality of honeycomb-shaped projections (5) are provided on an outer circumferential surface (U) of the roller (3) for forming the honeycomb pattern on the foundation sheet (M), each honeycomb-shaped projection (5) having, on its side facing away from the outer circumferential surface (U) of the roller (3), a free projection end (SE), **characterized in that** at least one chamber (K) for receiving a separating and/or cooling medium is provided inside the roller (3), and that at least one connection channel (6) is provided on the roller (3), which connects the chamber (K) with the free projection end (SE) of at least one of the honeycomb-shaped projections (5) and/or with the outer circumferential surface (U) of the roller (3).

2. Roller (3) according to claim 1, **characterized in that** at least one connection channel (6) is designed as a capillary.

3. Roller (3) according to claim 1 or 2, **characterized in that** at least the part of the roller (3) in which the at least one connection channel (6) is provided is manufactured by an additive manufacturing process, preferably by 3D printing.

4. Roller (3) according to any one of claims 1 to 3, **characterized in that** the roller (3) is cylindrical, wherein the roller (3) is preferably hollow-cylindrical in order to form the chamber (K) in a cavity of the hollow-cylindrical roller (3).

5. Roller (3) according to any one of claims 1 to 4, **characterized in that** at least one disc-shaped projection (8) and/or at least one circumferential groove (7) is provided on the roller (3) in the region of at least one axial end of the roller, preferably in the region of both axial ends of the roller.

6. Roller (3) according to any one of claims 1 to 5, **characterized in that** at least one longitudinal groove (9) is provided on the outer circumferential surface (U) of the roller (3), which connects opposite axial ends of the roller (3), and/or that at least one rib (10) is provided on the outer circumferential surface (U) of the roller (3), which connects opposite axial ends of the roller (3), the longitudinal groove (9) and/or the rib (10) preferably extending parallel to the roller axis of the roller (3).

7. Roller (3) according to any one of claims 1 to 6, **characterized in that** at least one opening (11) communicating with the chamber (K) is provided at an axial end face of the roller (3), the opening (11) being preferably closable by a cover (11a).

8. Roller (3) according to any one of claims 1 to 7, **characterized in that** the free projection end (SE) of at least one honeycomb-shaped projection (5) is formed in a pyramidal shape, the connection channel (6) preferably opening into a tip and/or into at least one lateral surface of the pyramidal free projection end (SE).

9. Device (1) for producing a foundation sheet (M) for a beehive, which has a honeycomb pattern, wherein the device (1) comprises two rollers (3) with parallel roller axes (WA) that are rotatable in opposite directions, the roller axes (WA) being arranged at a predetermined axial distance (X) from one another such that an intermediate space (Z) is formed between mutually facing portions of the outer circumferential surfaces (U) of the rollers (3), **characterized in that** at least one of the rollers (3) is designed according to any one of claims 1 to 8.

10. Device (1) according to claim 9, **characterized in that** a drive unit for driving the rollers (3) is provided in the device (1), the drive unit which is preferably comprising a crank drive for manual operation and/or an electric drive unit (15), preferably an electric motor, which is preferably configured to apply a drive torque to one of the rollers (3) and to transmit the drive torque via a gear mechanism of the device (1) to at least one further roller (3).

11. Device (1) according to claim 9 or 10, **characterized in that** the axial distance (X) is adjustable.

12. Device (1) according to any one of claims 9 to 11, **characterized in that** a feed device (14) for supplying liquid material (13) to the intermediate space (Z) is provided in the device (1), the feed device (14) preferably comprising a heating unit (18) for heating the material (13) and/or a metering unit (19) for dosing an amount of the liquid material (13).

13. Use of the device (1) according to any one of claims 9 to 12 for producing a foundation sheet (M) for a beehive having a honeycomb pattern, comprising the following steps:
- arranging the device (1) such that the roller axes (WA) of the rollers (3) are spaced apart in the horizontal direction in such a way that the intermediate space (Z) between the rollers forms a casting channel with a casting channel inlet (GE) and a casting channel outlet (GA),
- introducing a liquid material (13) for forming the foundation sheet into the casting channel inlet (GE) of the casting channel,
- rotating the rollers (3) in opposite directions.

14. Use according to claim 13, wherein a separating and/or cooling medium is introduced into the chamber (K) of at least one roller (3).

15. Use according to claim 13 or 14, wherein the liquid material (13) used is molten wax, plastic, metal or resin, preferably beeswax, and particularly preferably self-produced wax.

## Revendications

1. Rouleau (3) destiné à être utilisé dans un dispositif (1) pour la fabrication d'une feuille de cire (M) présentant un motif en nid d'abeille pour une ruche, selon lequel une pluralité de saillies en forme de cellules hexagonales (5) est disposée sur une surface périphérique externe (U) du rouleau (3) afin de former le motif en nid d'abeilles sur la feuille de cire (M), chaque saillie en forme de cellule (5) présentant, sur son côté opposé à la surface périphérique externe (U) du rouleau (3), une extrémité libre de saillie (SE), **caractérisé en ce qu'**au moins une chambre (K) destinée à recevoir un fluide de séparation et/ou de refroidissement est prévue à l'intérieur du rouleau (3), et **en ce qu'**au moins un canal de liaison (6) est prévu sur le rouleau (3), reliant la chambre (K) à l'extrémité libre (SE) d'au moins une des saillies en forme de cellule (5) et/ou à la surface périphérique externe (U) du rouleau (3).

2. Rouleau (3) selon la revendication 1, **caractérisé en ce qu'**au moins un canal de liaison (6) est formé en capillaire.

3. Rouleau (3) selon la revendication 1 ou 2, **caractérisé en ce qu'**au moins la partie du rouleau (3) dans laquelle est prévu ledit au moins un canal de liaison (6)) est réalisée par un procédé de fabrication additive, de préférence par impression 3D.

4. Rouleau (3) selon l'une quelconque des revendications 1 à 3, **caractérisé en ce que** le rouleau (3) est cylindrique, le rouleau (3) étant de préférence creux-cylindrique afin de former la chambre (K) dans une cavité du rouleau (3) creux-cylindrique.

5. Rouleau (3) selon l'une quelconque des revendications 1 à 4, **caractérisé en ce qu'**au moins une saillie en forme de disque (8) et/ou au moins une gorge périphérique (7) est prévue sur le rouleau (3) dans la région d'au moins une extrémité axiale du rouleau, de préférence dans la région des deux extrémités axiales du rouleau.

6. Rouleau (3) selon l'une quelconque des revendications 1 à 5, **caractérisé en ce qu'**au moins une rainure longitudinale (9) est prévue sur la surface périphérique externe (U) du rouleau (3), laquelle relie des extrémités axiales opposées du rouleau (3), et/ou **en ce qu'**au moins une nervure (10) est prévue sur la surface périphérique externe (U) du rouleau (3), laquelle relie des extrémités axiales opposées du rouleau (3), la rainure longitudinale (9) et/ou la nervure (10) s'étendant de préférence parallèlement à l'axe du rouleau (3).

7. Rouleau (3) selon l'une quelconque des revendications 1 à 6, **caractérisé en ce qu'**au moins une ouverture (11) communiquant avec la chambre (K) est prévue à une extrémité axiale, sur une face frontale du rouleau (3), l'ouverture (11) étant de préférence obturable par un couvercle (11a).

8. Rouleau (3) selon l'une quelconque des revendications 1 à 7, **caractérisé en ce que** l'extrémité libre (SE) d'au moins une saillie en forme de cellule (5) est réalisée sous forme pyramidale, le canal de liaison (6) débouchant de préférence dans une pointe et/ou dans au moins une surface latérale de l'extrémité libre pyramidale (SE).

9. Dispositif (1) pour la fabrication d'une feuille de cire (M) pour une ruche, présentant un motif en nid d'abeilles, le dispositif (1) comprenant deux rouleaux (3) munis d'axes de rouleaux parallèles (WA) pouvant tourner en sens opposés, les axes de rouleaux (WA) étant disposés à une distance axiale prédéterminée (X) l'un de l'autre de sorte qu'un espace intermédiaire (Z) soit formé entre des portions opposées des surfaces périphériques externes (U) des rouleaux (3), **caractérisé en ce qu'**au moins un des rouleaux (3) est conçu selon l'une quelconque des revendications 1 à 8.

10. Dispositif (1) selon la revendication 9, **caractérisé en ce qu'**une unité d'entraînement destinée à actionner les rouleaux (3) est prévue dans le dispositif (1), l'unité d'entraînement comprenant de préférence un entraînement à manivelle pour une commande manuelle et/ou une unité d'entraînement électrique (15), de préférence un moteur électrique, l'unité d'entraînement étant de préférence conçue pour exercer un couple d'entraînement sur l'un des rouleaux (3) et pour transmettre le couple d'entraînement, via un mécanisme d'engrenage du dispositif (1), à au moins un autre rouleau (3).

11. Dispositif (1) selon la revendication 9 ou 10, **caractérisé en ce que** la distance axiale (X) est réglable.

12. Dispositif (1) selon l'une quelconque des revendications 9 à 11, **caractérisé en ce qu'**un dispositif d'alimentation (14) destiné à acheminer un matériau liquide (13) vers l'espace intermédiaire (Z) est prévu dans le dispositif (1), le dispositif d'alimentation (14) comprenant de préférence une unité de chauffage (18) pour chauffer le matériau (13) et/ou une unité de dosage (19) pour doser une quantité du matériau liquide (13).

13. Utilisation du dispositif (1) selon l'une quelconque des revendications 9 à 12 pour la fabrication de la feuille de cire (M) pour une ruche présentant un motif en nid d'abeilles, comprenant les étapes suivantes :
- disposer le dispositif (1) de manière à ce que les axes de rouleaux (WA) des rouleaux (3) soient espacés dans la direction horizontale de telle sorte que l'espace intermédiaire (Z) entre les rouleaux forme un canal de coulée avec une entrée de canal de coulée (GE) et une sortie de canal de coulée (GA),
- introduire un matériau liquide (13) destiné à former la feuille de cire dans l'entrée de canal de coulée (GE) du canal de coulée,
- faire tourner les rouleaux (3) en sens opposés.

14. Utilisation selon la revendication 13, selon laquelle un fluide de séparation et/ou de refroidissement est introduit dans la chambre (K) d'au moins un rouleau (3).

15. Utilisation selon la revendication 13 ou 14, selon laquelle le matériau liquide (13) utilisé est de la cire fondue, du plastique, du métal ou de la résine, de préférence de la cire d'abeille, et particulièrement de préférence de la cire produite par les abeilles elles-mêmes.
